# FASCICULE DE BREVET EUROPEEN

(11) **EP 1 976 671 B1**
(45) Date de publication et mention de la délivrance du brevet: **18.09.2013**
(21) Numéro de dépôt: 07718289.7
(22) Date de dépôt: 22.01.2007
(51) Int. Cl.: B25J 9/16

(54) **PROCEDE ET SYSTEME PERMETTANT LA PREHENSION AUTOMATISEE DE PIECE(S)**
VERFAHREN UND SYSTEM ZUR AUTOMATISCHEN AUFNAHME VON TEILEN
METHOD AND SYSTEM ALLOWING THE AUTOMATIC PICKING OF PARTS

(30) Priorité: 23.01.2006 FR 0600569
(43) Date de publication de la demande: 08.10.2008
(73) Titulaire: Grosbois, Jérôme, 62000 Arras (FR)
(72) Inventeur: Grosbois, Jérôme, 62000 Arras (FR)
(74) Mandataire: Matkowska, Franck
(86) Numéro de dépôt international: PCT/FR2007/000114
(87) Numéro de publication internationale: WO 2007/083039

(56) Documents cités:
- EP-A- 0 667 124
- EP-A- 1 428 634
- EP-A2- 1 043 642
- EP-A2- 1 442 848
- EP-A2- 1 589 483
- US-B1- 6 721 444
- NATONEK E ET AL: "MODEL BASED VISION AS FEEDBACK FOR VIRTUAL REALITY ROBOTICS ENVIRONMENTS" PROCEEDINGS OF THE VIRTUAL REALITY ANNUAL INTERNATIONAL SYMPOSIUM. RESEARCH TRIANGLE PARK, MAR. 11 - 15, 1995, LOS ALAMITOS, IEEE COMP. SOC. PRESS, US, 11 mars 1995 (1995-03-11), pages 110-117, XP000529977 ISBN: 0-7803-2543-5 cité dans la demande

## Description

### Domaine technique

La présente invention concerne la préhension automatisée de pièce(s) au moyen d'un robot préhenseur. Elle trouve son application dans toute industrie où l'on doit manipuler individuellement des pièces au moyen d'un robot préhenseur.

### Art antérieur

Pour manipuler individuellement des pièces, il est usuel d'utiliser un robot préhenseur poly-articulé comportant un bras articulé à l'extrémité duquel est monté un outil de préhension, tel que par exemple une pince ou équivalent, adaptée à la géométrie de la pièce à saisir.

Lorsque la ou les pièces à saisir ont une position et lé cas échéant une orientation aléatoires dans l'espace de travail du robot, la préhension automatisée de chaque pièce par l'outil de préhension est plus compliquée, car elle impose notamment de gérer automatiquement la position (trois composantes en translation) et l'orientation (trois composantes en rotation) de l'outil de préhension par rapport à la pièce à saisir, ainsi que les problèmes de collision de la pièce saisie et de l'outil de préhension lors du mouvement de préhension, avec les éléments de l'environnement de travail (par exemple parois d'une caisse dans laquelle sont stockées la ou les pièces, convoyeur transportant la ou les pièces,...).

Egalement, lorsque les pièces à saisir sont disposées aléatoirement en vrac, se pose le problème de l'ordre de préhension des pièces.

Dans la demande de brevet européen EP 1 428 634, on propose une méthode de préhension automatisée de pièces en vrac, au moyen d'un robot préhenseur, ladite méthode permettant de gérer automatiquement l'ordre de préhension des pièces et permettant également de gérer des collisions du bras préhenseur du robot.

La méthode proposée dans cette publication repose sur la mise en oeuvre en combinaison de deux capteurs :
- un capteur de vision 3D
- un capteur de télémétrie.

Le capteur de vision 3D [référencé (4) sur les figures de la publication EP 1 428 634] est monté à l'extrémité du bras de préhension du robot et combine des moyens d'émission d'un faisceau lumineux et une camera vidéo qui permet de détecter le faisceau lumineux réfléchi par les objets.

Le capteur de télémétrie [référencé (10) sur les figures de la publication EP 1 428 634] est fixé au dessus de la scène de travail. Ce capteur de télémétrie (10) utilise par exemple les ultrasons.

Dans sa version la plus sophistiquée, la méthode de préhension décrite dans la publication EP 1 428 634 est basée sur la mise en oeuvre des étapes suivantes :
- Etapes S1 à S3: Acquisition d'une image de la scène de travail au moyen du capteur de vision 3D et calcul d'une ligne de visée du capteur pour chaque pièce détectée dans l'image acquise ; Les données de mesure Wk qui en résultent (lignes de visées) sont stockées en mémoire.
- Etapes S4 et S5 : Acquisition d'une topographie de la surface du lot d'objets en vrac par balayage et mesure de hauteur au moyen du capteur de télémétrie. Cette topographie de surface (données hij) est sauvegardée en mémoire.
- Etape S6 : A partir d'une part des données Wk (lignes de visée) et d'autre part des données (hij) de la topographie de surface, détermination de la position de chaque pièce sur la topographie de surface (par intersection de chaque ligne de visée Wk associée à chaque pièce avec un élément de surface Sij de la topographie). On obtient par exemple la courbe de la figure 2 de la publication EP 1 428 634 (topographie de surface avec localisation par un point d'intersection 40 d'une pièce).
- Etape S7 : détermination pour chaque pièce détectée de l'orientation approximative (Fk) de la pièce.
- Etape S8 : Sélection d'une pièce à saisir en fonction par exemple de deux critères : la pièce qui est la plus haute (1^{er} critère) et dont l'orientation Fk est appropriée (2^{nd} critère) pour une bonne préhension.
- Etape S9 : calcul d'une position appropriée du robot (position proche de la pièce à saisir sélectionnée à l'étape S8) en vue d'une mesure rapprochée au moyen du capteur de vision 3D.
- Etape S10 : Vérification des risques de collision entre le bras préhenseur robot (et notamment entre le capteur de vision 3D embarqué sur le bras préhenseur du robot) et l'environnement, dans la position de mesure rapprochée calculée à l'étape S9.
- Etape S11 : si pas de problème de collision, positionnement (position et orientation) du bras préhenseur dans la position de mesure proche calculée à l'étape S9 et détection au moyen du capteur de vision 3D embarqué de la position 3D et de l'orientation dans l'espace de la pièce à saisir.
- Etape S12 : détermination de la position et orientation du bras préhenseur pour saisir la pièce, à partir de la mesure rapprochée effectuée à l'étape précédente S11.
- Etape S13 : Vérification des risques de collision entre le bras de préhension du robot (et notamment entre le capteur de vision 3D embarqué sur le bras préhenseur du robot) et l'environnement (incluant les autres pièces en vrac) ; la méthode préconisée consiste à définir autour du bras préhenseur une région interdite dans laquelle aucun autre élément de la scène ne doit se trouver lorsque le bras est dans sa position de préhension de la pièce. Si une collision est détectée, on reprend le procédé à l'étape S8 (sélection d'une autre pièce à saisir).
- Etape S14 : Commande du robot pour l'exécution de la préhension de la pièce par le robot.

Cette publication EP 1 428 634 est intéressante, car la méthodes de préhension décrite permet:
- une gestion automatique de l'ordre de préhension des pièces (cf. Etape S8),
- une gestion automatique de la meilleure configuration de préhension pour le préhenseur (Cf. étape S12),
- et une gestion de la collision de ce préhenseur avec son environnement (cf. étapes S10 et S11).

Cependant, cette méthode présente plusieurs inconvénients. La gestion de la préhension des pièces est très complexe, car elle est basée sur la mise en oeuvre d'un capteur de télémétrie combiné à un capteur de vision 3D et sur une acquisition en deux étapes au moyen du capteur de vision 3D: dans une première étape, pour sélectionner et localiser approximativement la pièce à saisir et dans une seconde étape pour acquérir une image rapprochée plus précise de la pièce sélectionnée devant être saisie.

Ces moyens (capteur de vision 3D combiné à un capteur de télémétrie) rendent également complexe la gestion automatique des collisions. Il en résulte notamment que dans cette méthode la gestion des collisions est réalisée uniquement pour le préhenseur avec son environnement, sans tenir compte notamment de la pièce saisie par l'outil de préhension.

Cette méthode ne permet pas non plus de détecter un recouvrement d'une pièce par rapport à une autre susceptible en pratique de faire obstacle à la préhension.

On a également proposé dans la demande de brevet européen EP 1 442 848, une solution automatisée de localisation et de préhension de pièces en vrac au moyen d'un robot préhenseur. Dans cette solution, on utilise un capteur 3D, de type caméra CCD, monté à l'extrémité du bras préhenseur du robot. Dans une première étape, on positionne ce capteur 3D à une distance éloignée des pièces à saisir et on capture une image de l'ensemble des pièces. Dans cette image d'ensemble, on effectue une détection et localisation automatiques des pièces. Dans une seconde étape, on rapproche le capteur 3D d'une pièce à saisir, et on capture une image rapprochée de cette pièce, afin de permettre une préhension automatisée de cette pièce. Dans cette solution, il est nécessaire au préalable de construire des modèles des pièces à saisir en capturant des images 3D de chaque type de pièce, dans différentes postions. Ces modèles des pièces sont utilisés pour effectuer l'étape précitée de détection et localisation automatiques des pièces, et pour effectuer l'étape précitée de préhension automatique d'une pièce sélectionnée. D'une part l'utilisation de modèles issus de capture d'images des pièces dans différentes positions, rend cette solution de préhension peut précise, et inadaptée à la préhension de des pièces de structures complexes. D'autre part, cette construction préalable des modèles des pièces par capture d'images est fastidieuse.

Un robot semi-automatisé pour la préhension d'objets a également déjà été proposé dans l'article « Model Based Vision as feedback for Virtual Reality Robotics Environments » E. Natonek et al, Proceedings of the virtual reality annual international symposium research triangle park, IEEE, 11 mars 1995, pages 110-117.

Ce robot est associé à un environnement virtuel, avec lequel un opérateur peut interagir. Dans cette solution technique, l'opérateur crée et positionne manuellement dans l'environnement virtuel un robot virtuel et les objets virtuels qui correspondent respectivement au robot réel et aux objets réels à saisir, et définit les trajectoires optimales du robot dans cet environnement virtuel, en utilisant notamment des modèles 3D du robot et de ces objets. Cet environnement virtuel, une fois créé manuellement par l'opérateur, est utilisé pour contrôler et corriger automatiquement la trajectoire du robot réel lors de la préhension d'un objet. Cette solution technique impose à chaque fois de construire manuellement l'environnement virtuel associé au robot, et notamment les objets virtuels correspondant aux objets réels à saisir, et ne permet pas une préhension complètement automatisée, avec notamment une localisation automatique du ou des objets réels à saisir.

### Objectif de l'invention

La présente invention vise à proposer une nouvelle solution technique de préhension automatisée d'au moins une pièce au moyen d'un robot comportant un outil de préhension ; comparativement aux méthodes de préhension précitées décrites dans les demandes de brevet européen EP 1 428 634 et EP 1 442 848, l'invention permet notamment une localisation automatique plus perfectionnée et plus performante de la pièce à saisir, et en cas de pluralité de pièces, un contrôle plus perfectionné et plus performant de l'ordre de préhension des pièces.

### Résumé de l'invention

L'invention a ainsi pour premier objet un procédé de préhension automatisée d'au moins une pièce réelle (Pj) positionnée dans un environnement de travail réel, au moyen d'un outil de préhension réel. Ce procédé comprend les étapes successives suivantes:
(a) numérisation 3D, sous la forme d'un nuage (N) de points 3D [Nᵢ(Xᵢ, Yᵢ, Zᵢ)], de la surface d'une scène de travail réelle (STR) constituée par l'environnement de travail réel et par chaque pièce réelle (Pj) présente dans cet environnement de travail,
(b) localisation automatique, dans le nuage (N) de points issu de l'étape (a), de chaque pièce virtuelle (P'j) et de l'environnement de travail virtuel, au moyen des modèles numériques CAO 3D de chaque pièce réelle (Pj) et de l'environnement de travail réel,
(c) construction automatique d'une scène de travail virtuelle (STV) en trois dimensions correspondant à la scène de travail réelle (STR) et constituée de chaque pièce virtuelle (P'j) et de l'environnement de travail virtuel localisés à l'étape (b), ladite construction étant réalisée automatiquement au moyen des modèles numériques CAO 3D de chaque pièce réelle (Pj) et de l'environnement de travail réel, et au moyen des données dé localisation [(x,y,z) ;(α β, γ)] de chaque pièce virtuelle (P'j) et de l'environnement de travail virtuel qui ont été déterminées à l'étape (b),
(d) sélection automatique d'une pièce virtuelle (P'j) dans la scène de travail virtuelle (STV) issue de l'étape (c),
(e) commande de l'outil de préhension réel en sorte de saisir automatiquement la pièce réelle (Pj) correspondant à la pièce virtuelle (P'j) sélectionnée à l'étape (d).

Le procédé de l'invention est particulièrement intéressant pour saisir automatiquement une pièce parmi un lot de pièces se chevauchant de manière aléatoire (lot de pièces en vrac), mais peut néanmoins également être utilisé pour saisir une pièce isolée ou pour saisir une pièce parmi un ensemble de pièces ne se chevauchant pas.

Dans le cadre de l'invention, la ou les pièces à saisir peuvent être identiques (dans ce cas on utilise un seul modèle CAO 3D de la pièce) ou être différentes (dans ce cas on utilise plusieurs modèles CAO, un modèle pour chaque type de pièce).

Dans le cadre de l'invention, la ou les pièces à saisir peuvent être fixes dans l'espace de travail du robot préhenseur (par exemple pièce(s) posée(s) dans une caisse ou sur un plan de travail) ou mobiles (par exemple pièce(s) posées sur un convoyeur en mouvement). Dans le cas où la ou les pièces sont mobiles, la loi de mouvement du convoyeur doit être connue afin d'adapter au plus juste la commande du robot lors de la phase de préhension ; il s'agit de synchroniser le mouvement du robot avec le mouvement du convoyeur.

De préférence, mais de manière facultative selon l'invention, le procédé de préhension de l'invention comporte les caractéristiques techniques additionnelles ci-après, prises isolément ou en combinaison :
- l'environnement de travail réel comporte au moins deux pièces réelles (Pj), et les étapes (a) à (e) sont réitérées automatiquement jusqu'à ce qu'il n'y ait plus de pièce dans l'environnement de travail réel ;
- l'environnement de travail réel comporte au moins deux pièces réelles (Pj), et avant de valider définitivement la sélection à l'étape (d) de la pièce virtuelle (P'j), on vérifie au préalable dans la scène de travail virtuelle (STV), en appliquant au moins un critère de recouvrement prédéfini, si ladite pièce virtuelle (P'j) est récouverte au moins partiellement par une pièce virtuelle adjacente, et dans le cas où ladite pièce virtuelle (P'j) est recouverte par une pièce virtuelle adjacente conformément au critère de recouvrement prédéfini, on ne sélectionne pas cette pièce ;
- avant de valider définitivement la sélection à l'étape (d) de la pièce virtuelle (P'j), on vérifie au préalable dans la scène de travail virtuelle (STV) si il y a une collision entre au moins ladite pièce virtuelle (P'j) et l'environnement de travail virtuel et/ou entre au moins ladite pièce virtuelle (P'j) et une autre pièce virtuelle, et en cas de collision détectée on ne sélectionne pas cette pièce ;
- avant de valider définitivement la sélection à l'étape (d) de la pièce virtuelle (P'j), on met en position dans la scène de travail virtuelle (STV) un outil de préhension virtuel qui est défini au moyen du modèle numérique CAO 3D de l'outil de préhension réel et de telle sorte que l'outil de préhension virtuel est positionné par rapport à ladite pièce virtuelle (P'j) dans au moins une configuration de préhension prédéfinie, on vérifie si il y a une collision entre au moins cet outil de préhension virtuel et l'environnement de travail virtuel et/ou entre au moins cet outil de préhension virtuel et une autre pièce virtuelle, et en cas de collision détectée on ne sélectionne pas cette pièce (P'j) ;
- le procédé est mis en oeuvre pour saisir automatiquement au moins une pièce (Pj) parmi un ensemble de plusieurs pièces en vrac.

L'invention a également pour autres objets :
- Un système permettant la préhension automatisée d'au moins une pièce réelle (Pj) positionnée dans un environnement de travail réel, ledit système de préhension comportant un robot préhenseur équipé d'au moins un outil de préhension réel, et des moyens de commande qui permettent de commander au moins le robot préhenseur, des moyens de numérisation 3D conçus pour réaliser l'étape (a) du procédé de préhension défini précédemment, et des moyens de calcul qui sont conçus pour réaliser automatiquement les étapes (b) à (d) du procédé de préhension défini précédemment ; les moyens de commande sont conçus pour réaliser l'étape (e) du procédé de préhension défini précédemment, à partir de données calculées par les moyens de calcul.
- Un programme de calcul enregistré sur un support mémoire ou dans une mémoire, et qui d'une part est exécutable automatiquement par des moyens de calcul programmables d'un système de préhension, ledit système de préhension comportant en outre un robot préhenseur équipé d'au moins un outil de préhension réel, des moyens de commande qui permettent de commander au moins le robot préhenseur, et des moyens de numérisation 3D permettant une numérisation tridimensionnelle de la surface d'un objet réel ou ensemble d'objets réels, sous la forme d'un nuage (N) de points 3D [Nᵢ(Xᵢ, Yᵢ, Zᵢ)] ; ce programme de calcul, lorsqu'il est exécuté par lesdits moyens de calcul permet de réaliser automatiquement les étapes (b) à (d) du procédé de préhension défini précédemment.

### Brève description des dessins

D'autres caractéristiques et avantages de l'invention apparaîtront plus clairement à la lecture de la description détaillée ci-après d'une variante préférée de réalisation de l'invention, laquelle description est donnée à titre d'exemple non limitatif et non exhaustif de l'invention, et en référence aux dessins annexés sur lesquels :
- la figure 1 représente de manière schématique un système de préhension de l'invention comportant un outil de préhension monté sur le flasque d'un robot poly-articulé,
- la figure 2 est une représentation 3D d'un exemple de pièce pouvant être saisie et manipulée avec l'outil de préhension du robot préhenseur de la figure 1,
- la figure 3 est une représentation 3D de l'outil de préhension du robot de la figure 1 saisissant une pièce identique à celle de la figure 2 dans une première configuration de préhension,
- la figure 4 est une représentation 3D de l'outil de préhension du robot de la figure 1 saisissant une pièce identique à celle de la figure 2 dans une deuxième configuration de préhension,
- la figure 5 représente un exemple de nuage de points 3D obtenu à l'aide de moyens d'acquisition du système de préhension de la figure 1,
- la figure 6 est une représentation 3D de la scène de travail virtuelle (STV) construite automatiquement à partir notamment du nuage de points de la figure 5,
- la figure 7 est une représentation 3D d'une scène de travail virtuelle (STV) comportant un lot de plusieurs pièces identiques à celles de la figure 2, lesdites pièces étant stockées en vrac dans une caisse, avec certaines pièces se chevauchant partiellement, et l'une des pièces étant saisie par l'outil de préhension du robot de la figure 1, dans la première configuration de préhension précitée et sans problème de recouvrement avec une autre pièce,
- la figure 8 est une représentation 3D d'une scène de travail virtuelle (STV) comportant le même lot de pièces en vrac que la figure 7, l'une des pièces étant saisie par l'outil de préhension du robot de la figure 1, dans la première configuration de préhension précitée de la figure 3 et avec un problème de recouvrement par une autre pièce adjacente,
- la figure 9 est une représentation 3D d'une scène de travail virtuelle (STV) comportant le même lot de pièces en vrac que la figure 7, l'une des pièces étant saisie par l'outil de préhension du robot de la figure 1, dans la deuxième configuration de préhension précitée de la figure 4 et sans problème de recouvrement avec une autre pièce,
- la figure 10 est une représentation 3D d'une scène de travail virtuelle (STV) comportant le même lot de pièces en vrac que la figure 7, l'une des pièces étant saisie par l'outil de préhension du robot de la figure 1, dans la deuxième configuration de préhension précitée de la figure 4 et avec un problème de collision de l'outil de préhension,
- la figure 11 est une représentation 3D d'un lot de plusieurs pièces identiques à celles de la figure 2 rangées individuellement dans des compartiments d'une caisse,
- la figure 12 est une représentation 3D d'un lot de plusieurs pièces identiques à celle de la figure 2, lesdites pièces étant stockées à plat en semi vrac dans une caisse avec la même orientation (même face de dessus visible), par exemple ces pièces ont été rangées de la même façon mais elles ont bougé lors du transport, et
- la figure 13 est un organigramme illustrant les principales étapes d'une variante particulière de mise en oeuvre du procédé de préhension automatisée de l'invention.

### Description détaillée

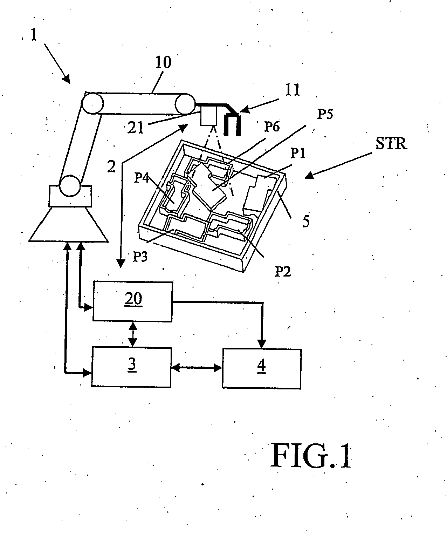

On a représenté sur la figure 1 un exemple de système de préhension conforme à l'invention.

### Système de préhension

Ce système de préhension comporte :
- un robot préhenseur poly-articulé 1,
- des moyens de numérisation tridimensionnelle 2,
- des moyens de commande 3,
- et des moyens de calcul 4.

Dans l'application particulière de la figure 1, le système de préhension est utilisé pour saisir automatiquement, l'une après l'autre, les pièces réelles Pj stockées dans une caisse 5.

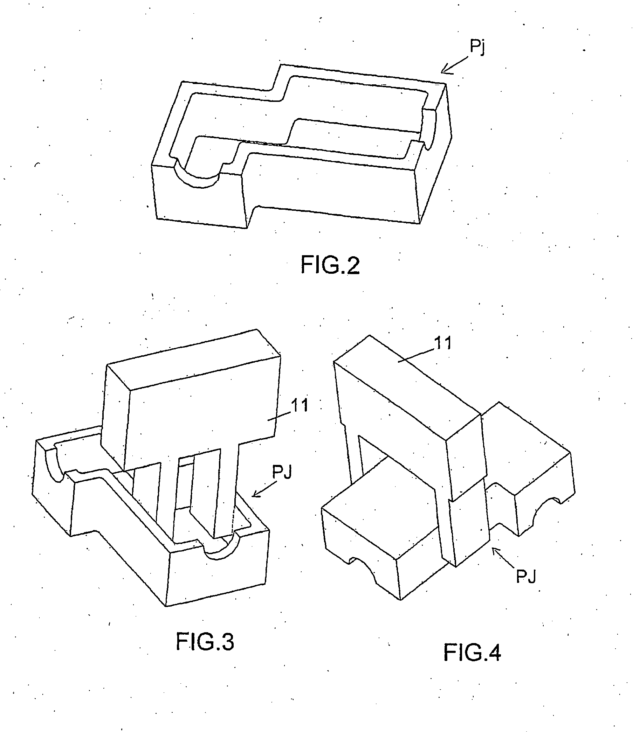

Dans les exemples décrits ci-après, toutes les pièces Pj sont identiques à celle de la figure 2. L'invention peut néanmoins être utilisée avec des pièces Pj qui ont une géométrie différente de celle de la figure 2 et/ou avec des pièces Pj qui ne sont pas toutes identiques.

L'invention n'est pas limitée à la préhension de pièces stockées dans une caisse, mais peut d'une manière plus générale être utilisée pour saisir automatiquement au moins une pièce dans un environnement de travail, ledit environnement de travail n'étant pas nécessairement une caisse 5, et/ou ladite pièce pouvant être statique comme dans les exemples particuliers des figures annexées ou être mobile dans l'environnement de travail, par exemple en étant posée sur un convoyeur mécanique mobile par rapport au robot préhenseur 1.

Dans la suite de la description, la caisse 5 sera désignée également et plus généralement par les termes « environnement de travail réel » ; l'ensemble constitué par l'environnement de travail réel 5 et par les pièces réelles Pj réelles présentes dans cet environnement de travail réel 5 sera désigné « scène de travail réelle». Sur la figure 1, la scène de travail réelle est référencée STR.

### Robot préhenseur (1)

La structure du robot préhenseur 1 est connue. Ce robot comporte un bras poly-articulé 10 à l'extrémité duquel est montée une pince de préhension 11 actionnable, et des moyens de motorisation pour la commande du mouvement du bras 10.

L'invention n'est pas limitée à l'exemple particulier de robot 1 et d'outil de préhension 11 de la figure 1, mais peut d'une manière plus générale être mise en oeuvre avec tout autre type de robot et tout autre type d'outil de préhension. En particulier, le type de robot sera choisi en fonction notamment du nombre de degrés de liberté souhaités pour le mouvement de l'outil de préhension. Le robot pourra être fixé au sol ou bien suspendu au plafond pour des raisons d'accessibilité de l'outillage dans la zone de travail. L'outil de préhension 11 n'a pas nécessairement la forme d'une pince et est choisi en sorte d'être adapté à la géométrie des pièces devant être saisies et manipulées.

### Moyens de numérisation tridimensionnelle (2)

Les moyens 2 de numérisation 3D permettent d'une manière générale de numériser, sous la forme d'un nuage de points 3D, la surface (encore communément désignée « peau ») d'un objet.

Dans le cadre de l'invention, ils sont utilisés pour numériser, sous la forme d'un nuage (N) de points 3D Nᵢ(Xᵢ, Yᵢ, Zᵢ)], les surfaces (peaux) des objets constitutifs de la scène de travail réelle STR, c'est-à-dire les surfaces de l'environnement de travail réel (caisse 5 dans l'exemple illustré) et des pièces réelles (Pj) présentes dans cet environnement de travail réel. Ce nuage (N) de points 3D Nᵢ(Xᵢ, Yᵢ, Zᵢ)] est une représentation discrète de la géométrie en trois dimensions de la peau des objets constitutifs de la scène de travail réelle STR.

Dans l'exemple particulier de la figure 1, les moyens 2 de numérisation 3D comportent un capteur 21 de numérisation 3D et un automate de vision 20.

De manière connue en soi, l'automate de vision 20 comporte un processeur, au moins une mémoire dans laquelle est stockée un programme local dit « programme de numérisation » qui est exécutable par ce processeur, et une interface d'entrées/sorties permettant au processeur de communiquer avec le capteur 21 de numérisation 3D, avec les moyens de commande 3 et avec les moyens de calcul 4 décrits ci-après.

L'exécution par ce processeur du programme de numérisation permet à l'automate de vision 20 de commander le capteur de numérisation 21, de telle sorte que ce capteur 21 acquiert les mesures. L'automate de vision 20 traitent ces mesures brutes issues du capteur 21 sous la forme d'un nuage (N) de points 3D Nᵢ(Xᵢ, Yᵢ, Zᵢ)] codés dans le référentiel du capteur 21. La numérisation 3D ainsi effectuée est une représentation discrète des surfaces (peaux) des objets constitutifs de la scène de travail réelle STR. Suite à la numérisation 3D, l'automate de vision 20 envoie le nuage (N) de points 3D Nᵢ(Xᵢ, Yᵢ, Zᵢ)] aux moyens de calcul 4.

Dans le cadre de l'invention, le capteur 21 de numérisation 3D peut être constitué par différents types de capteurs permettant, selon le type de capteur, une mesure avec contact ou une mesure sans contact.

Parmi les capteurs permettant une mesure avec contact, on peut citer tous les palpeurs mécaniques que l'on peut déplacer au contact des surfaces des éléments de la scène de travail réelle STR (parois de la caisse 5 et pièces réelles Pj dans l'exemple de la figure 1).

Pour la mise en oeuvre de l'invention, on utilise néanmoins de préférence un capteur 21 de numérisation 3D permettant une mesure sans contact tel que par exemple :
- au moins une caméra (de type CCD ou autre) combinée à une source lumineuse de type laser, la caméra permettant de capter le faisceau lumineux réfléchi par la surface de l'objet à numériser placé dans le champ de la caméra ; ce type de capteur fonctionne par triangulation,
- capteurs fonctionnant par télémétrie et utilisant une source laser, ultrasons, micro ondes,...

Dans le cas d'un capteur sans contact, celui-ci peut selon le cas être fixe ou mobile par rapport à là scène de travail réelle STR.

Dans l'exemple particulier de la figure 1, on utilise comme capteur 21 de numérisation 3D une caméra numérique et une source laser, embarquées sur le bras préhenseur 10 du robot 1. On pourrait dans une autre variante de l'invention utiliser un capteur 21 de numérisation fixe ou mobile, et monté sur un support indépendant du robot préhenseur 1.

Dans une autre variante de l'invention, on peut également utiliser au moins deux capteurs 21 de numérisation 3D ayant des directions de mesure différentes, en sorte d'acquérir au moins deux nuages de points 3D qui sont complémentaires l'un de l'autre, les surfaces cachées d'un nuage de points 3D acquis au moyen d'un premier capteur étant par exemple. avantageusement visibles sur l'autre nuage de points 3D acquis au moyen du deuxième capteur, du fait de la position et de l'orientation différentes de ce deuxième capteur par rapport à la scène de travail réelle STR.

### Moyens de commande (3)

Les moyens de commande 3 du robot sont connus et ne seront pas détaillés. Ils se présentent de manière usuelle sous la forme d'une baie de commande comportant un processeur, au moins une mémoire dans laquelle est stocké un programme local dit « de commande » qui est exécutable par ce processeur, et une interface d'entrées/sorties. Le processeur des moyens de commande 3 communique avec les moyens de motorisation du robot, les moyens d'actionnement de l'outil de préhension 11, et avec l'automate de vision 20 des moyens 2 de numérisation 3D.

Le programme de commande est usuel et ne sera donc pas détaillé. Il permet, lorsqu'il est exécuté par le processeur des moyens de commande 3 :
- de déclencher la numérisation 3D par une commande envoyée à l'automate de vision 20,
- de piloter le mouvement du bras 10 poly-articulé du robot et de commander la pince de préhension 11 (ouverture/fermeture) du robot préhenseur 1.

### Moyens de calcul (4)

Les moyens de calcul 4 peuvent être implémentés au moyen de tout type d'unité de traitement programmable. Par exemple, on peut implémenter les moyens de calcul au moyen d'une carte électronique à microprocesseur ou microcontrôleur, l'essentiel étant que cette unité de traitement comporte un processeur, au moins une mémoire pouvant contenir un programme local exécutable par le processeur, et une interface de communication (Entrées/Sorties) permettant au processeur de communiquer avec le processeur des moyens de commande 3, et également dans le cas de l'exemple particulier de la figure 1, avec le processeur de l'automate de vision 20.

Ces moyens de calcul 4 peuvent par exemple être réalisés au moyen d'un micro-ordinateur ou être réalisés au moyen d'une ou plusieurs cartes électroniques spécifiques. Indifféremment selon l'invention, les moyens de calcul 4 peuvent ou non comporter une interface de visualisation de type écran.

Dans une mémoire des moyens de calcul 4 est stocké un programme de calcul qui est spécifique de l'invention.

L'exécution de ce programme de calcul par le processeur des moyens de calcul 4 en combinaison avec l'exécution du programme de numérisation de l'automate de vision 20 et avec l'exécution du programme de commande des moyens de commande 3 permet de mettre en oeuvre le procédé de préhension automatisée de l'invention.

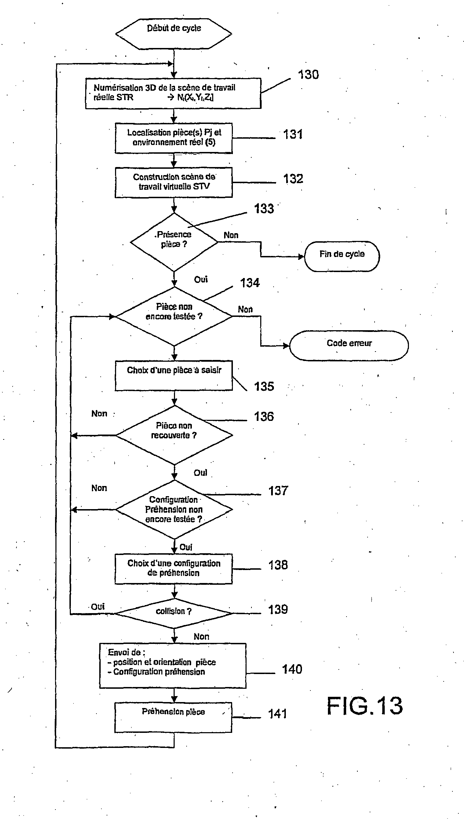

### Procédé de préhension - figure 13

Une variante particulière de mise en oeuvre d'un procédé de préhension automatisée de l'invention va à présent être détaillée en référence à l'organigramme de la figure 13.

### Etape 130 - numérisation de la scène de travail

Les moyens de commande 3, envoient à l'automate de vision 20 une commande de numérisation. Le processeur de l'automate de vision 20 commande le capteur 21 de numérisation 3D, en sorte de réaliser automatiquement une numérisation 3D de la surface de la scène de travail réelle STR (exécution du programme de numérisation).

Dans l'exemple de la figure 1, cette scène de travail réelle STR est constituée par la caisse 5, contenant six pièces identiques réelles P1 à P6 disposées en vrac.

Les données codant le nuage N de points 3D [Nᵢ(Xᵢ, Yᵢ, Zᵢ)] qui résulte de cette numérisation sont transmises par l'automate de vision 20 directement aux moyens de calcul 4. Dans une autre variante de réalisation, lorsque l'automate de vision 21 n'est pas relié aux moyens de calcul 4, ce nuage N de points 3D [Nᵢ(Xᵢ, Yᵢ, Zᵢ)] peut être transmis par l'automate de vision 20 aux moyens de calcul 4 en passant par les moyens de commande 3.

Selon le type de capteur 21 de numérisation 3D utilisé, cette opération de numérisation peut éventuellement nécessiter un déplacement du capteur 21 par rapport à la scène de travail réelle STR en sorte d'effectuer un balayage de la surface de ladite scène de travail réelle STR.

Egalement, pour un capteur 21 donné et en fonction notamment de la précision souhaitée pour la numérisation, du temps de cycle de numérisation et des dimension réelles de la scène travail réelle STR, on peut indifféremment, selon l'invention, soit capturer la globalité de la scène de travail réelle STR au moyen du capteur (en le déplaçant si nécessaire par rapport à la scène de travail réelle STR) soit découper la scène de travail réelle STR en plusieurs scènes de travail de plus petites dimensions. Dans le deuxième cas, l'étape 130 de l'organigramme de la figure 13 est mise en oeuvre sur une scène de travail réelle de plus petite dimension (par exemple une partie seulement de la caisse 5 et les pièces Pj qu'elle contient) et le procédé de préhension de la figure 13 est exécuté dans sa globalité de manière itérative sur chaque scène de travail réelle de plus petite dimension.

Dans la suite de la description, on considère que lors de l'étape 130 on effectue une numérisation 3D de la surface de la scène de travail réelle STR constituée par l'intégralité de la caisse 5 et de tout son contenu.

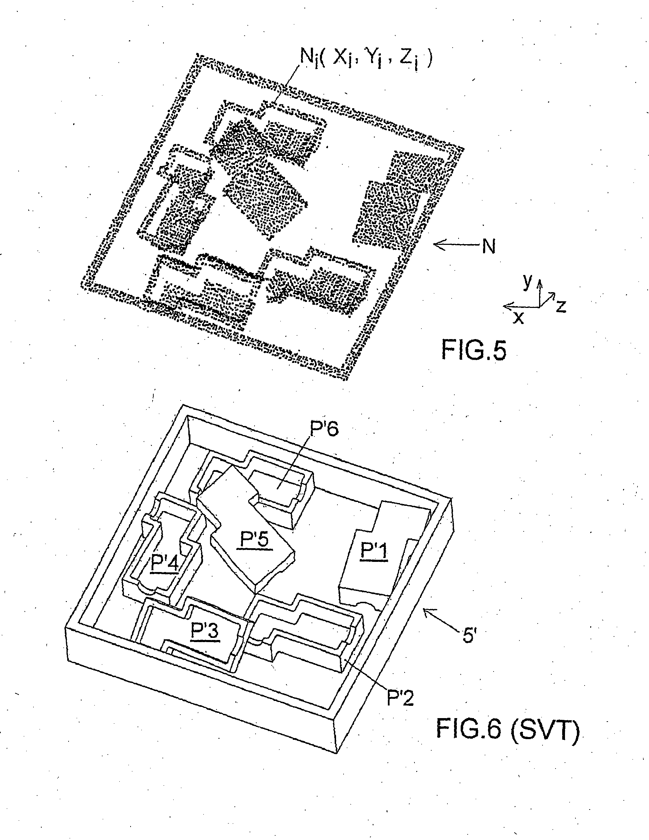

A titre d'exemple, on a représenté sur la figure 5, un exemple de nuage (N) de points 3D Nᵢ(Xᵢ, Yᵢ, Zᵢ)] résultant d'une numérisation 3D de la scène de travail réelle STR de la figure 1 (caisse 5 contenant six pièces en vrac P1 à P6).

### Etape 131 - localisation

A partir de cette étape 131, le procédé de préhension est mis en oeuvre au moyen du programme de calcul exécuté par le processeur des moyens de calcul 4.

Dans une mémoire des moyens de calcul 4 sont stockés :
- un fichier ou équivalent contenant le modèle numérique CAO 3D d'une pièce réel Pj,
- un fichier ou équivalent contenant le modèle numérique CAO 3D de l'environnement de travail réel, c'est-à-dire la caisse 5 dans les exemples de figures annexées.

Par modèle numérique CAO 3D d'un objet réel (pièce réelle Pj ou environnement de travail réel 5), on désigne tout ensemble de données décrivant sous forme mathématique la géométrie de la surface (plan, cylindre, cône, surface de Bézier, surface de NURBS,...) de l'objet.

Dans l'exemple particulier des figures annexées, toutes les pièces, Pj étant identiques, on utilise un seul modèle numérique CAO 3D pour toutes les pièces. Dans les applications de l'invention où les pièces Pj à saisir sont différentes (formes et/ou dimensions différentes), on stocke en mémoire des moyens de calcul 4 un modèle numérique CAO 3D pour chaque type de pièce réelle Pj.

Le ou les modèles numériques CAO 3D des pièces réelles Pj et le modèle numérique CAO 3D de l'environnement de travail réel 5 sont produits généralement au moyen du programme de dessin ayant permis leur conception. Néanmoins, ils peuvent également être reconstitués, de manière connue en soi, à partir d'une numérisation 3D de leur surface. Au cours de l'étape de localisation 131, le processeur des moyens de calcul 4 traite le nuage (N) de points 3D [Nᵢ(Xᵢ, Yᵢ, Zᵢ)], en sorte de localiser au moyen des modèles numériques CAO 3D des pièces réelles Pj et de l'environnement de travail réel 5, chaque pièce virtuelle P'j correspondant à une pièce réel Pj et l'environnement de travail virtuel 5' correspondant à l'environnement de travail réel 5. Au cours de cette étape de localisation, les moyens de calcul 4 déterminent automatiquement pour chaque pièce virtuelle P'j et pour l'environnement de travail virtuel 5' localisés dans le nuage (N) de points 3D, des données de localisation spatiale, telles que par exemple une position (x, y, z) et une orientation (α, (β, γ) dans le référentiel du capteur de numérisation 21.

Différentes méthodes de localisation peuvent être mise en oeuvre.

A titre d'exemple non limitatif et non exhaustif de l'invention, cette localisation peut être réalisée en deux étapes successives à partir de chaque modèle numérique CAO 3D :
(1) une première étape de correspondance du nuage (N) de points 3D [Nᵢ(Xᵢ, Yᵢ, Zᵢ)] et du modèle numérique CAO 3D (d'une pièce réelle Pj ou de l'environnement de travail réel 5) ;
(2) une deuxième étape d'alignement ou de recalage du nuage (N) de points 3D [Nᵢ(Xᵢ, Yᵢ, Zᵢ)] sur le modèle numérique CAO 3D.

### (1) Etape de correspondance :

Différentes techniques connues permettent de trouver une position (x,y,z) et une orientation (α, (β, γ) approximatives d'une pièce virtuelle P'j ou de l'environnement de travail virtuel 5' dans le nuage N de points 3D [Nᵢ(Xᵢ, Yᵢ, Zᵢ)]. Le principe de base des ces différentes techniques consiste à extraire des caractéristiques géométriques locales de la pièce réelle Pj ou de l'environnement de travail réel 5 qui sont indépendantes de leur position et de leur orientation dans l'espace. Les critères retenus se calculent à partir du nuage N de points 3D [Nᵢ(Xᵢ, Yᵢ, Zᵢ)] et du modèle numérique CAO 3D.

De préférence, on connecte les différentes caractéristiques géométriques locales extraites, en construisant un arbre de relation pour le modèle numérique CAO 3D et un arbre de relation pour le nuage N de points 3D [Nᵢ(Xᵢ, Yᵢ, Zᵢ)], et pour localiser dans le nuage N de points 3D l'objet correspondant au modèle numérique CAO 3D, on compare l'arbre de relation extrait du modèle numérique CAO 3D, et l'arbre de relation extrait du nuage N de points 3D [Nᵢ(Xᵢ, Yᵢ, Zᵢ)].

Une première approche pour extraire les caractéristiques géométriques locales consiste à extraire des paramètres géométriques dans l'ensemble des régions locales propres au modèle numérique CAO 3D et au nuage N de points 3D [Nᵢ(Xᵢ, Yᵢ, Zᵢ)] : par exemple la courbure moyenne, la courbure gaussienne, la normale moyenne...

Une deuxième approche consiste à approximer la surface du modèle numérique CAO 3D et le nuage N de points 3D [Nᵢ(Xᵢ, Yᵢ, Zᵢ)] par un ensemble de surfaces dites simples : plants, cylindres, cônes, tores... Une surface complexe de type NURBS ou Bézier pourra être approximée par exemple par plusieurs surfaces simples. Les surfaces dites simples qui approximent le mieux la surface du modèle numérique CAO 3D dépendent directement de sa courbure ; un plan est adapté lors d'une courbure faible, un cylindre peut être adapté lors d'une courbure non négligeable mais relativement constante. A partir du nuage de points, chacune des régions locales est approximée par une surface dite simple. Le choix de la surface simple est fonction là aussi de la courbure évaluée.

Une troisième approche consiste à extraire seulement des points caractéristiques du modèle numérique CAO 3D et du nuage N de points 3D [Nᵢ(Xᵢ, Yᵢ, Zᵢ)] en fonction de critères : courbure maximale, changement du signe de la courbure, inflexion de la courbure...

De préférence afin d'accélérer la vitesse de traitement, le calcul des données géométriques extraites des modèles numériques CAO 3D des pièces Pj et de l'environnement de travail réel 5 est effectué une fois pour toute et préalablement à la mise en oeuvre de l'organigramme de la figure 13. Ces données géométriques extraites de chaque modèle numérique CAO sont stockées en mémoire des moyens de calcul 4. Il en résulte dans ce cas que l'étape 131 de localisation de la figure 13 n'est pas effectuée directement à partir des modèles numériques CAO 3D des pièces Pj et de l'environnement de travail 5, mais à partir de ces données géométriques en mémoire extraites de ces modèles numériques CAO 3D.

### (2) Etape d'alignement ou de recalage

A l'issue de l'étape (1) de correspondance, pour chaque pièce virtuelle P'j et pour l'environnement de travail virtuelle 5', une ou plusieurs solutions possibles de localisation (position et d'orientation) peuvent selon le cas avoir été trouvées.

Chaque solution est testée automatiquement en utilisant le modèle numérique CAO 3D afin de trouver la bonne transformation solide. Un calcul itératif détermine la meilleure transformation solide en minimisant au sens des moindres carrés la distance entre le nuage (N) de points [Nᵢ(Xᵢ, Yᵢ, Zᵢ)] et la surface du modèle numérique CAO 3D. En pratique, l'erreur moyenne obtenue à la fin du calcul représente la distance moyenne entre chaque point retenu du nuage de points [Nᵢ(Xᵢ, Yᵢ, Zᵢ)] et la surface du modèle numérique CAO 3D. Elle est directement liée à l'imprécision de la chaîne de mesure et au défaut de forme de la pièce réelle Pj ou de l'environnement de travail réel 5 par rapport à leur modèle numérique CAO 3D.

Pour de plus amples informations sur la reconnaissance automatique d'objet en utilisant un modèle numérique CAO 3D, l'homme du métier pourra par exemple se référer à la publication intitulée « Automated extraction of features from CAD models for 3D object recognition » by Jan Bôhm, Claus Brenner, Jens Gühring and Dieter Fritsch , ISPRS, Vol XXXIII, Amsterdam 2000.

Pour de plus amples informations sur un algorithme d'alignement d'un nuage de points avec un modèle surfacique, l'homme du métier pourra par exemple se référer à la publication intitulée « A method for registration of 3-d shapes », P.J. Besl et N.D. McKay, IEEE Trans. Pat. Anal. et Mach. Intel. 14(2), pagels 239-256, Février 1992.

L'utilisation d'un modèle numérique CAO 3D d'un objet (pièce réelle Pj ou environnement de travail réelle 5) pour localiser dans un nuage de points 3D ledit objet permet de filtrer les bruits de mesure (points aberrants).

### Etape 132- construction de la scène de travail virtuelle STV

A l'issue de l'étape 131 de localisation, les moyens de calcul 4 comportent en mémoire les données de localisation spatiale, telles que par exemple une position (x, y, z) et une orientation (α, β, γ), qui leur permettent de localiser l'environnement de travail virtuel 5' et chaque pièce virtuelle P'j dans le référentiel 3D du capteur 21 de numérisation 3D.

Les moyens de calcul 4 construisent une scène de travail virtuelle. numérique (STV) à partir des données de localisation spatiale [positions (x,y,z) et orientations (α, (β, γ)] de l'environnement de travail virtuelle 5' et de chaque pièce Pj localisés à l'étape 131, et de leur modèles numériques CAO 3D.

Cette scène de travail virtuelle numérique STV est constituée par les pièces virtuelles P'j qui correspondent aux pièces réelles Pj et par un environnement de travail virtuel numérique 5' (parois virtuelles de la caisse) ' qui correspond à l'environnement de travail réel 5. Dans cette scène de travail virtuelle numérique STV, les objets numériques virtuels sont des objets 3D décrits par des surfaces.

Du fait de l'utilisation des modèles numériques CAO 3D, lors de la construction de cette scène de travail virtuelle numérique STV, on prend avantageusement en compte des surfaces cachées des objets qui n'étaient pas visibles par le capteur 21 de numérisation 3D.

### Test 133

Si aucune pièce virtuelle P'j n'est présente dans la scène de travail virtuelle STV, les moyens de calcul 4 arrêtent le programme de calcul, l'environnement de travail (caisse 5) étant vide. Le procédé de préhension est achevé.

### Test 134

Si au moins une pièce virtuelle P'j est présente dans la scène de travail virtuelle STV, les moyens de calcul 4 vérifient si parmi ces pièces il en existe au moins une qui n'a pas déjà été sélectionnée (au cours d'une étape 135 réalisée lors d'une itération précédente).

Dans la négative (toutes les pièces localisées ont déjà été sélectionnées), les moyens de calcul 4 génèrent par exemple un code erreur et le programme de calcul est interrompu.

Dans l'affirmative (existence d'une pièce non encore sélectionnée), les moyens de calcul 4 poursuivent l'exécution du programme de calcul (étapes 135 et suivants).

### Etape 135

Les moyens de calcul 4 sélectionnent automatiquement une pièce virtuelle P'j parmi la ou les pièces non encore sélectionnées, en appliquant un ou plusieurs critères de sélection prédéfinis.

Dans une variante de mise en oeuvre, il peut s'agir par exemple d'un choix aléatoire.

Dans une autre variante de mise en oeuvre, les moyens de calcul 4 choisissent par exemple, parmi les pièces non encore sélectionnées, la pièce P'j la plus haute, en comparant les positions (y) en hauteur desdites pièces selon l'axe vertical (Y).

### Test 136

Les moyens de calcul 4 vérifient automatiquement si, dans la scène de travail virtuelle numérique STV construite à l'étape 132 précédente, la pièce virtuelle P'j sélectionnée à l'étape 135 est au moins en partie recouverte par une autre pièce virtuelle adjacente et en appliquant au moins un critère de recouvrement prédéfini.

Ce critère de recouvrement peut être de type tout ou rien, un recouvrement étant détecté quelle que soit la surface de recouvrement des deux pièces.

Ce critère de recouvrement peut également prendre en compte une surface minimale prédéfinie de recouvrement des pièces. Dans ce cas, le programme de calcul est conçu de telle sorte que le test de recouvrement 136 est effectué avec une tolérance prédéfinie plus ou moins importante et de préférence paramétrable par l'utilisateur, afin de tenir compte de la surface de recouvrement des pièces, un recouvrement étant par exemple détecté uniquement lorsque la surface de recouvrement des pièces est supérieure à une valeur prédéfinie. D'autres critères de recouvrement peuvent être définis, par exemple en définissant des volumes (cylindres, parallélépipède,...) où le recouvrement n'est pas autorisé. Ces volumes sont définis généralement en tenant compte de la géométrie de l'outil de préhension.

En cas de recouvrement détecté, les moyens de calcul 4 rebouclent sur le test 134 en vue de sélectionner une autre pièce.

En cas d'absence de recouvrement, les moyens de calcul 4 poursuivent le programme de calcul (test 137,...).

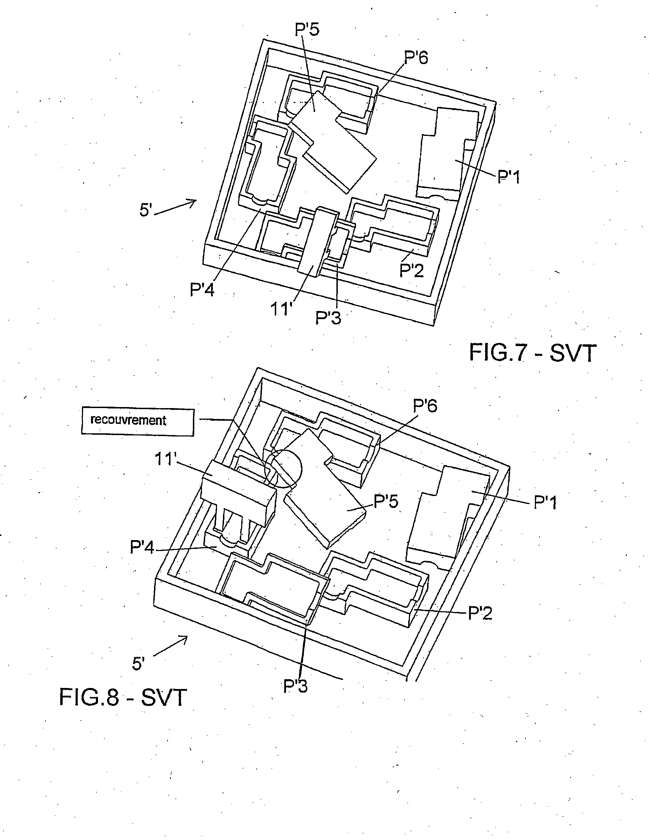

La figure 8 illustre un exemple de représentation d'une scène de travail virtuelle numérique STV dans laquelle la pièce virtuelle sélectionnée lors de la réalisation de l'étape 135 est la pièce P'4, et pour laquelle les moyens de calcul 4 détectent automatiquement un problème de recouvrement avec la pièce virtuelle P'5 lors de la réalisation du test de recouvrement 136.

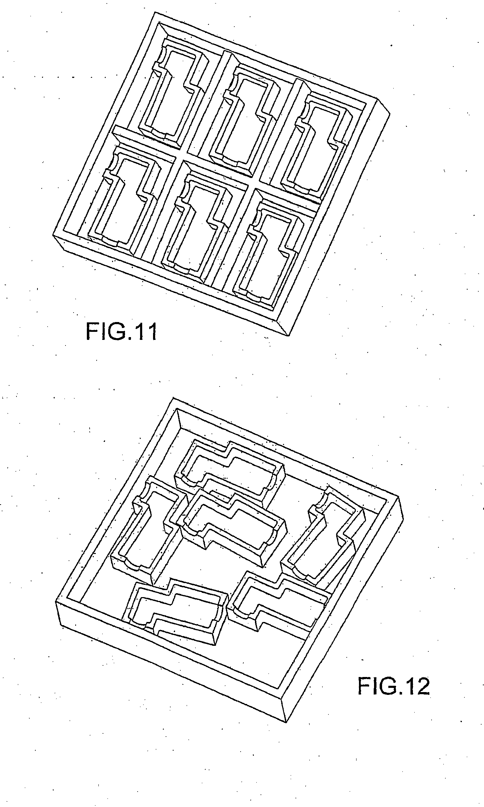

Il convient de souligner que ce test de recouvrement est facultatif selon l'invention. Il est préférable de mettre en oeuvre ce test de recouvrement dans les applications où les pièces à saisir sont disposées aléatoirement en vrac avec risque de recouvrement comme dans le cas de l'exemple de la figure 8. En revanche ce test est inutile dans toutes les applications où il n'y pas de risque qu'une pièce puisse recouvrir en partie une autre pièce, tel que par exemple dans l'application de la figure 11 ou dans l'application de la figure 12.

### Test 137 et étape 138

Les pièces réelles Pj des figures annexées peuvent être saisies par l'outil de préhension 11 selon deux configurations de préhension distinctes prédéfinies qui sont illustrées respectivement sur les figures 3 et 4, et qui dans les exemples particuliers illustrés se différencient par le réglage de l'écartement de la pince de préhension 11. Ces deux configurations de préhension sont préenregistrées en mémoire des moyens de calcul 4. Pour chaque configuration de préhension, l'utilisateur définit, par exemple au moyen d'un logiciel de CAO connu, la mise en position de l'outil de préhension sur la pièce. La transformation solide de l'outil de préhension dans le référentiel pièce pour chacune des configurations est sauvegardée en mémoire. Le modèle numérique CAO de l'outil de préhension peut être unique pour toutes les configurations ou bien différent (même pince mais ouverture différente, pince différente...).

Lorsqu'une pièce P'j a été sélectionnée (étape 135) et a été testée comme n'étant pas recouverte (test 136), les moyens de calcul 4 vérifient automatiquement (test 137) si il existe pour ladite pièce P'j , une configuration de préhension qui n'a pas encore été testée (lors d'une itération précédente).

Dans la négative (toutes les configurations de préhension ont déjà été testées pour cette pièce), les moyens de calcul 4 rebouclent sur le test 134 en vue de la sélection d'une autre pièce.

Dans l'affirmative, les moyens de calcul 4 sélectionnent automatiquement (étape 138) une configuration de préhension parmi celle(s) non encore testée(s) pour cette pièce.

### Test 139 (collision) et étape 140

Une fois la configuration de préhension sélectionnée, les moyens de calcul 4 positionnent l'outil de préhension virtuelle 11' (correspondant à l'outil, de préhension réel 11) par rapport à la pièce P'j sélectionnée à l'étape 134, dans la scène de travail virtuelle STV construite à l'étape 132, conformément à la configuration de préhension sélectionnée à l'étape 138.

Ce calcul est réalisé au moyen du modèle numérique CAO 3D de l'outil de préhension réel 11, et des données de localisation spatiale [la position (x,y,z) et l'orientation (α,β,γ) ] de la pièce virtuelle P'j sélectionnée.

On a représenté à titre d'exemples :
- sur la figure 7 une simulation dans la scène de travail virtuelle STV de l'outil de préhension virtuel 11' dans une première configuration de préhension par rapport à la pièce virtuelle sélectionnée P'3,
- sur la figure 8, le résultat d'une simulation dans la scène de travail virtuelle STV de l'outil de préhension virtuel 11' dans une première configuration de préhension par rapport à la pièce virtuelle sélectionnée

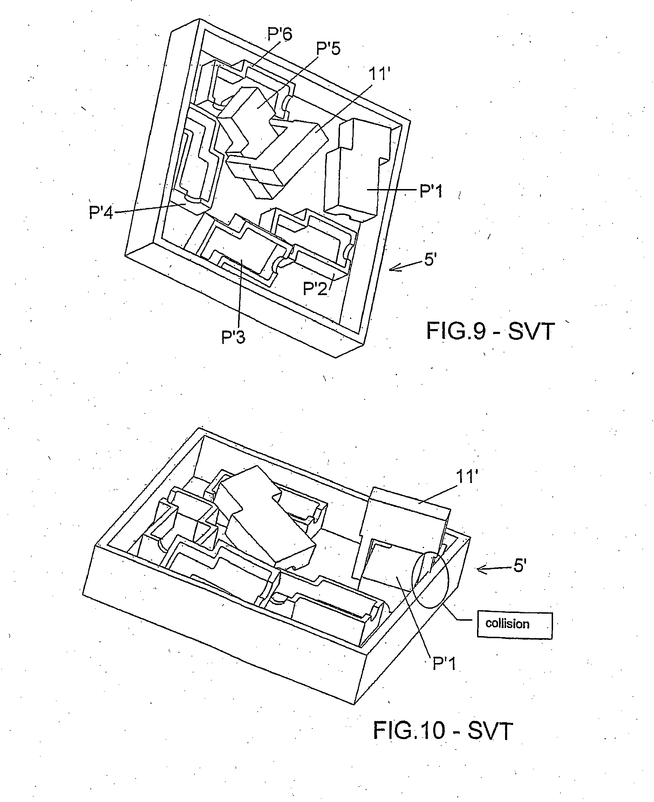

- sur la figure 9, le résultat d'une simulation dans la scène de travail virtuelle STV de l'outil de préhension virtuel 11' dans une deuxième configuration de préhension par rapport à la pièce virtuelle sélectionnée P'5, et
- sur la figure 10 le résultat d'une simulation dans la scène de travail virtuelle STV de l'outil de préhension virtuel 11' dans une deuxième configuration de préhension par rapport à la pièce virtuelle sélectionnée P'1.

Les moyens de calcul 4 vérifient, dans la scène de travail virtuelle STV contenant l'outil de préhension virtuelle 11' en position de préhension sur la pièce virtuelle P'j sélectionnée :
(i) si il existe une intersection entre la surface de l'ensemble formé par l'outil de préhension 11' virtuelle positionné par rapport à la pièce P'j sélectionnée et la surface de l'une au moins des autres pièces virtuelles ;
(ii) si il existe une intersection entre la surface de l'ensemble formé par l'outil de préhension 11' virtuelle positionné par rapport à la pièce P'j sélectionnée et la surface de l'environnement de travail virtuel 5'.

Si une au moins des conditions (i) ou (ii) ci-dessus est positive (existence d'une intersection), on détecte une collision (tel que par exemple dans le cas de la figure 10/ collision de l'outil de préhension virtuel 11' avec l'une des parois de l'environnement de travail virtuel 5'), et les moyens de calcul 4 rebouclent sur le test 134 en vue de la sélection d'une autre pièce. Pour des raisons de sécurité, le test de non collision peut tenir compte d'une tolérance ou distance minimum lors des tests (i) et (ii) à la place du test d'intersection. Cela revient à garantir physiquement une distance minimum entre deux éléments testés de la scène réelle.

Dans une version perfectionnée du programme de calcul, les détection de collision (i) et (ii) précitées sont calculées en stimulant le mouvement de retrait de l'ensemble formé par l'outil de préhension 11' virtuelle et là pièce P'j sélectionnée, et en vérifiant les collisions (i) et (ii) pour différentes positions de cet ensemble le long de la trajectoire de retrait.

Si les deux conditions (i) et (ii) ci-dessus sont négatives (pas de collision détectée), tel que par exemple dans le cas des figures 7 et ou 9, les moyens de calcul 4 valident la pièce P'j et la configuration de préhension sélectionnés et envoie (étape 140) aux moyens de commande 3: la configuration de préhension qui a été validée et les données de localisation [position (x',y',z') et orientation (α' β' γ')] dans le référentiel du robot préhenseur 1 de la pièce réelle Pj qui correspond à la pièce virtuelle P'j qui a été validée.

### Etape 141

Cette étape 141 est exécutée par le processeur des moyens de commande 3 (programme de commande).

Les moyens de commande 3 pilotent, de manière appropriée et connue en soi, les moyens de motorisation du robot préhenseur 1 et l'outil de préhension réel 11, en sorte de déplacer dans l'espace l'outil de préhension réel 11 et permettre la saisie de la pièce réelle Pj dont les données de localisation ont été envoyées aux moyens de commande 3, et dans la configuration de préhension qui a été envoyée aux moyens de commande 3.

Une fois la pièce réelle Pj retirée de l'environnement de travail réel 5 par le robot préhenseur 1, les moyens de calcul 4 rebouclent sur l'étape 130.

Le procédé préhension est exécuté jusqu'à ce que (test 133 et « fin de cycle ») le programme de calcul ne détecte plus de pièce présente dans la scène de travail virtuelle STV construite à l'étape 132.

## Revendications

1. Procédé de préhension automatisée d'au moins une pièce réelle (Pj) positionnée dans un environnement de travail réel (5), au moyen d'un outil de préhension réel (11) le procédé comprend les étapes successives suivantes :
(a) numérisation 3D, sous la forme d'un nuage (N) de points 3D [Nᵢ(Xᵢ, Yᵢ, Zᵢ)], de la surface d'une scène de travail réelle (STR) constituée par l'environnement de travail réel (5) et par chaque pièce réelle (Pj) présente dans cet environnement de travail,
(b) localisation automatique, dans le nuage (N) de points issu de l'étape (a), de chaque pièce virtuelle (P'j) et de l'environnement de travail virtuel (5'), au moyen des modèles numériques CAO 3D de chaque pièce réelle (Pj) et de l'environnement de travail réel (5),
(c) construction automatique d'une scène de travail virtuelle (STV) en trois dimensions correspondant à la scène de travail réelle (STR) et constituée de chaque pièce virtuelle (P'j) et de l'environnement de travail virtuel (5') localisés à l'étape (b), ladite construction étant réalisée automatiquement au moyen des modèles numériques CAO 3D de chaque pièce réelle (Pj) et de l'environnement de travail réel (5), et au moyen des données de localisation [(x,y,z) ;(α, β, γ)] de chaque pièce virtuelle (P'j) et de l'environnement de travail virtuel (5') qui ont été déterminées à l'étape (b),
(d) sélection automatique d'une pièce virtuelle (P'j) dans la scène de travail virtuelle (STV) issue de l'étape (c),
(e) commande de l'outil de préhension réel (11) en sorte de saisir automatiquement la pièce réelle (Pj) correspondant à la pièce virtuelle (P'j) sélectionnée à l'étape (d).

2. Procédé selon la revendication 1, **caractérisé en ce que** l'environnement de travail réel (5) comporte au moins deux pièces réelles (Pj), et **en ce que** les étapes (a) à (e) sont réitérées automatiquement jusqu'à ce qu'il n'y ait plus de pièce dans l'environnement de travail réel (5).

3. Procédé selon la revendication 1 ou 2, **caractérisé en ce que** l'environnement de travail réel (5) comporte au moins deux pièces réelles (Pj), et **en ce qu'**avant de valider définitivement la sélection à l'étape (d) de la pièce virtuelle (P'j), on vérifie au préalable dans la scène de travail virtuelle (STV), en appliquant au moins un critère de recouvrement prédéfini, si ladite pièce virtuelle (P'j) est recouverte au moins partiellement par une pièce virtuelle adjacente, et dans le cas où ladite pièce virtuelle (P'j) est recouverte par une pièce virtuelle adjacente conformément au critère de recouvrement prédéfini, on ne sélectionne pas cette pièce.

4. Procédé selon l'une des revendications 1 à 3, **caractérisé en ce qu'**avant de valider définitivement la sélection à l'étape (d) de la pièce virtuelle (P'j), on vérifie au préalable dans la scène de travail virtuelle (STV si il y a une collision entre au moins ladite pièce virtuelle (P'j) et l'environnement de travail virtuel (5') et/ou entre au moins ladite pièce virtuelle (P'j) et une autre pièce virtuelle, et en cas de collision détectée on ne sélectionne pas cette pièce.

5. Procédé selon l'une des revendications 1 à 4, **caractérisé en ce qu'**avant de valider définitivement la sélection à l'étape (d) de la pièce virtuelle (P'j), on met en position dans la scène de travail virtuelle (STV) un outil de préhension virtuel (11') qui est défini au moyen du modèle numérique CAO 3D de l'outil de préhension réel (11) et de telle sorte que l'outil de préhension virtuel (11') est positionné par rapport à ladite pièce virtuelle (P'j) dans au moins une configuration de préhension prédéfinie, on vérifie si il y a une collision entre au moins cet outil de préhension virtuel (11') et l'environnement de travail virtuel (5') et/ou entre au moins cet outil de préhension virtuel (11') et une autre pièce virtuelle, et en cas de collision détectée on ne sélectionne pas cette pièce (P'j).

6. Procédé selon l'une des revendications 1 à 5, **caractérisé en ce qu'**il est mis en oeuvre pour saisir automatiquement au moins une pièce (Pj) parmi un ensemble de plusieurs pièces en vrac.

7. Système permettant la préhension automatisée d'au moins une pièce réelle (Pj) positionnée dans un environnement de travail réel (5), ledit système de préhension comportant un robot préhenseur (1) équipé d'au moins un outil de préhension réel (11), et des moyens de commande (3) qui permettent de commander au moins le robot préhenseur (1), **caractérisé en ce qu'**il comporte des moyens (2) de numérisation 3D conçus pour réaliser l'étape (a) du procédé de préhension défini à l'une des revendications 1 à 6, et des moyens de calcul (4) qui sont conçus pour réaliser automatiquement les étapes (b) à (d) du procédé de préhension défini à l'une des revendications 1 à 6, et **en ce que** les moyens de commande (3) sont conçus pour réaliser l'étape (e) du procédé de préhension défini à l'une des revendications 1 à 6, à partir de données calculées par les moyens de calcul (4).

8. Programme de calcul enregistré sur un support mémoire ou dans une mémoire, et qui d'une part est exécutable automatiquement par des moyens de calcul (4) programmables d'un système de préhension, ledit système de préhension comportant en outre un robot préhenseur (1) équipé d'au moins un outil de préhension réel (11), des moyens de commande (3) qui permettent de commander au moins le robot préhenseur (1), et des moyens (2) de numérisation 3D permettant une numérisation tridimensionnelle de la surface d'un objet réel ou ensemble d'objets réels, sous la forme d'un nuage (N) de points 3D [Nᵢ(Xᵢ, Yᵢ, Zᵢ)], ledit programme de calcul, lorsqu'il est exécuté par lesdits moyens de calcul (4) permet de réaliser automatiquement les étapes (b) à (d) du procédé de préhension défini à l'une des revendications 1 à 6.

## Patentansprüche

1. **Verfahren zum automatisierten Ergreifen** von zumindest einem reellen Teil (P'j), das in einer reellen Arbeitsumgebung (5) positioniert ist, mit Hilfe von einem reellen Greifwerkzeug (11), wobei das Verfahren die nachstehenden, aufeinander folgenden Schritte umfasst:
(a) 3D-Digitalisierung der Oberfläche einer reellen Arbeitsszene (STR), die aus der reellen Arbeitsumgebung (5) und jedem reellen Teil (Pj) besteht, das in dieser Arbeitsumgebung vorhanden ist, in Form von einer 3D-Punktwolke (N) von Punkten [Nᵢ (Xᵢ, Yᵢ, Zᵢ)],
(b) automatische Lokalisierung eines jeden virtuellen Teils (P'j) und der virtuellen Arbeitsumgebung (5') in der aus Schritt (a) hervorgegangenen Punktwolke (N) mit Hilfe von digitalen 3D-CAD-Modellen eines jeden reellen Teils (Pj) und der reellen Arbeitsumgebung (5),
(c) automatische Konstruktion einer virtuellen Arbeitsszene (STV in drei Dimensionen, die der reellen Arbeitsszene (STR) entspricht und aus jedem virtuellen Teil (P'j) und der virtuellen Arbeitsumgebung (5') besteht, die in Schritt (b) lokalisiert wurden, wobei die Konstruktion automatisch mit Hilfe der digitalen 3D-CAD-Modelle eines jeden reellen Teils (Pj) und der reellen Arbeitsumgebung (5) sowie mit Hilfe von Lokalisierungsdaten [(x, y, z); (α, β, γ] eines jeden virtuellen Teils (P'j) und der virtuellen Arbeitsumgebung (5') erfolgt, die in Schritt (b) bestimmt wurden,
(d) automatische Auswahl eines virtuellen Teils (P'j) in der virtuellen Arbeitsszene (STV), die aus Schritt (c) hervorgegangen ist,
(e) Ansteuern des reellen Greifwerkzeugs (11), so dass automatisch das reelle Teil (Pj) ergriffen wird, das dem virtuellen Teil (P'j) entspricht, das in Schritt (d) ausgewählt wurde.

2. Verfahren nach Anspruch 1, **dadurch gekennzeichnet, dass** die reelle Arbeitsumgebung (5) zumindest zwei reelle Teile (Pj) aufweist und dass die Schritte (a) bis (e) automatisch solange wiederholt werden, bis kein Teil mehr in der reellen Arbeitsumgebung (5) vorhanden ist.

3. Verfahren nach Anspruch 1 oder 2, **dadurch gekennzeichnet, dass** die reelle Arbeitsumgebung (5) zumindest zwei reelle Teile (Pj) umfasst und dass vor der endgültigen Validierung der Auswahl des virtuellen Teils (P'j) in Schritt (d) im Vorfeld unter Anwendung zumindest eines vorbestimmten Deckungskriteriums in der virtuellen Arbeitsszene (STV) überprüft wird, ob das virtuelle Teil (P'j) von einem angrenzenden virtuellen Teil zumindest teilweise überdeckt wird und in dem Falle, wo das virtuelle Teil (P'j) von einem angrenzenden virtuellen Teil entsprechend dem vorbestimmten Überdeckungskriterium überdeckt wird, dieses Teil nicht ausgewählt wird.

4. Verfahren nach einem der Ansprüche 1 bis 3, **dadurch gekennzeichnet, dass** vor der endgültigen Validierung der Auswahl des virtuellen Teils (P'j) in Schritt (d) im Vorfeld in der virtuellen Arbeitsszene (STV überprüft wird, ob eine Kollision zwischen dem zumindest einen virtuellen Teil (P'j) und der virtuellen Arbeitsumgebung (5') und/oder zwischen dem zumindest einen virtuellen Teil (P'j) und einem weiteren virtuellen Teil besteht und dass im Falle einer erfassten Kollision dieses Teil nicht ausgewählt wird.

5. Verfahren nach einem der Ansprüche 1 bis 4, **dadurch gekennzeichnet, dass** vor der endgültigen Validierung der Auswahl des virtuellen Teils (P'j) in Schritt (d) ein virtuelles Greifwerkzeug (11') in die virtuelle Arbeitsszene (STV) eingesetzt wird, das mit Hilfe des digitalen 3D-CAD-Modells des reellen Greifwerkzeugs (11) bestimmt wird, so dass das virtuelle Greifwerkzeug (11') bezüglich des virtuellen Teils (P'j) in zumindest eine vorbestimmte Greifkonfiguration positioniert wird, und überprüft wird, ob eine Kollision zumindest zwischen diesem virtuellen Greifwerkzeug (11') und der virtuellen Arbeitsumgebung (5') und/oder zumindest zwischen diesem virtuellen Greifwerkzeug (11') und einem weiteren virtuellen Teil besteht, und dass im Falle einer erfassten Kollision dieses Teil (P'j) nicht ausgewählt wird.

6. Verfahren nach einem der Ansprüche 1 bis 5, **dadurch gekennzeichnet, dass** es dazu durchgeführt wird, um zumindest ein Teil (Pj) aus einer Gruppe von mehreren Schüttteilen automatisch zu ergreifen.

7. System zum automatisierten Ergreifen ven zumindest einem reellen Teil (P'j), das in einer reellen Arbeitsumgebung (5) positioniert ist, wobei das Greifsystem einen Greifroboter (1) aufweist, der mit zumindest einem reellen Greifwerkzeug (11) ausgestattet ist, sowie Steuermittel (3), mit denen zumindest der Greifroboter (1) gesteuert werden kann, **dadurch gekennzeichnet, dass** es Mittel (2) zur 3D-Digitalisierung aufweist, die dazu ausgelegt sind, den Schritt (a) des Greiftrerfahrens nach einem der Ansprüche 1 bis 6 durchzuführen, sowie Rechenmittel (4), die dazu ausgelegt sind, die Schritte (b) bis (d) des Greifverfahrens nach einem der Ansprüche 1 bis 6 automatisch durchzuführen, und dass die Steuermittel (3) dazu ausgelegt sind, den Schritt (e) des Greifverfahrens nach einem der Ansprüche 1 bis 6 ausgehend von den mit den Rechenmitteln (4) errechneten Daten durchzuführen.

8. **Rechenprogramm**, das auf einem Speichermedium oder in einem Speicher gespeichert ist und einerseits automatisch von programmierbaren Rechenmitteln (4) eines Greifsystems ausführbar ist, wobei das Greifsystem ferner einen Greifroboter (1) aufweist, der mit zumindest einem reellen Greifwerkzeug (12) ausgestattet ist, sowie Steuermittel (3), mit denen zumindest der Greifroboter (1) steuerbar ist, und Mittel (2) zur 3D-Digitalisierung, die eine dreidimensionale Digitalisierung der Oberfläche eines reellen Gegenstands oder einer Gruppe von reellen Gegenständen in Form von einer 3D-Punktwolke (N) von Punkten [Nᵢ (Xᵢ, Yᵢ, Zᵢ)] gestatten, wobei das Rechenprogramm dann, wenn es von den Rechenmitteln (4) ausgeführt wird, gestattet, die Schritte (b) bis (d) des Greifverfahrens nach einem der Ansprüche 1 bis 6 automatisch durchzuführen.

## Claims

1. : A method for the automatic picking of at least one real part (Pj) positioned in a real work environment (5), using a real picking tool (11), the method comprising the following successive steps:
(a) 3D digitization, in the form of a cloud (N) of 3D points [Nᵢ (Xᵢ, Yᵢ, Zᵢ)], of the surface of the real work situation (STR) formed by the real work environment (5) and each real part (Pj) present in that work environment,
(b) automatic location, in the cloud (N) of points resulting from step (a), of each virtual part (P'j) and the virtual work environment (5'), using 3D CAD digital models of each real part (Pj) and the real work environment (5),
(c) automatic construction of a three-dimensional virtual work situation (STV) corresponding to the real work situation (STR) and made up of each virtual part (P'j) and the virtual work environment (5') located in step (b), said construction being done automatically using 3D CAD digital models of each real part (P'j) and the real work environment (5), and using location data [(x,y,z); (α,β,γ)] of each virtual part (P'j) and the virtual work environment (5') that were determined in step (b),
(d) automatic selection of the virtual part (P'j) in the virtual work situation (STV) resulting from step (c),
(e) controlling the real picking tool (11) so as to automatically grasp the real part (Pj) corresponding to the virtual part (P'j) selected in step (d).

2. The method according to claim 1, **characterized in that** the real work environment (5) includes at least two real parts (Pj), and **in that** steps (a) to (e) are reiterated automatically until there are no more parts in the real work environment (5).

3. The method according to claim 1 or 2, **characterized in that** the real work environment (5) includes at least two real parts (Pj), and **in that** before definitively validating the selection in step (d) of the virtual part (P'j), one first verifies, in the virtual work situation (STV), by applying at least one predefined overlap criterion, whether the virtual part (P'j) is at least partially overlapped by an adjacent virtual part, and in the event the virtual part (P'j) is overlapped by an adjacent virtual part according to the predefined overlap criterion, that part is not chosen.

4. The method according to one of claims 1 to 3, **characterized in that** before definitively validating the selection in step (d) of the virtual part (P'j), one first verzfies, in the virtual work situation (STV), whether there is a collision between at least said virtual part (P'j) and the virtual work environment (5') and/or between at least said virtual part (P'j) and another virtual part, and in case of detected collision, that part is not selected.

5. The method according to one of claims 1 to 4, **characterized in that** before definitively validating the selection in step (d) of the virtual part (P'j), one positions, in the virtual work situation (STV), a virtual picking tool (11') that is defined using a 3D CAD digital model of the real picking tool (11) and such that the virtual picking tool (11') is positioned relative to said virtual part (P'j) in at least one predefined picking configuration, it is verified whether there is a collision between at least a virtual picking tool (11') and the virtual work environment (5') and/or between at least said virtual picking tool (11') and another virtual part, and in case of detected collision, that part (P'j) is not selected.

6. The method according to one of claims 1 to 5, **characterized in that** it is implemented to pick at least one part (Pj) automatically from among a set of several bulk parts.

7. A system allowing the automatic picking of at least one real part (Pj) positioned in a real work environment (5), said picking system including a picking robot (1) equipped with at least one real picking tool (11), and control means (3) that make it possible to control at least the picking robot (1), **characterized in that** it includes 3D digitization means (2) designed to carry out step (a) of the picking method defined in one of claims 1 to 6, and computation means (4) that are designed to carry out steps (b) to (d) of the picking method defined in one of claims 1 to 6 automatically, and **in that** the control means (3) are designed to carry out step (e) of the picking method defined in one of claims 1 to 6, from data computed by the computation means (4).

8. A computation program stored on a memory medium or in a memory, and which is executable automatically by programmable computation means (4) of the picking system, said picking system further including a picking robot (1) equipped with at least one real picking tool (11), control means (3) that make it possible to control at least the picking robot (1), and 3D digitization means (2) allowing three-dimensional digitization of the surface of a real object or set of real objects, in the form of a cloud (N) of three points [Nᵢ (Xᵢ, Yᵢ, Zᵢ)], said computation program, when executed by said computation means (4), makes it possible to carry out steps (b) to (d) of the picking method defined in one of claims 1 to 6 automatically.
